# EUROPEAN PATENT APPLICATION

(11) **EP 0 553 987 A1**
(43) Date of publication of application: **04.08.1993**
(21) Application number: 93300346.9
(22) Date of filing: 20.01.1993
(51) Int. Cl.: G01N 21/41, G01N 21/88

(54) **Coating defect detection system based on light scattering**

(30) Priority: 27.01.1992 US 826350
(71) Applicant: AT&T Corp., New York, NY 10013-2412 (US)
(72) Inventor: Frazee, Ralph Edward, Jr., Bricktown, New Jersey 08723 (US); Lovelace, Charles Ridley, Union City, Georgia 30291 (US); Morris, Paul Mobley, Decatur, Georgia 30033 (US); Smithgall, David Harry, East Windsor, New Jersey 08520 (US)
(74) Representative: Johnston, Kenneth Graham

(57) **Abstract**

A defect detection system (10) of this invention applies one or more spacially-separated, orthogonally-aligned light beams (22 and 24) to a coated fiber (32) such that the light passes through the entire width of both the fiber (32) and its applied coating (31). As the light passes through a fiber (32) and coating (31) of good quality, a particular pattern, with a predictable intensity level, is produced by the forward scattered portions of the light beams directed through the coated fiber (32).

In accordance with the present invention, the intensity of the forward scattered patterns is continuously monitored by a series of photodiodes (48) each located within a lens/detector module (40, 42, 44 and 46) and positioned precisely within the expected forward scatter pattern. Various defects in the coating cause the path of the light passing through the coated fiber (32) to be altered, thereby directing some of the forward scattered light outside the detection area of the photodiodes (48). Such distortion to the forward scatter patterns causes the light intensity level measured at the photodiodes (48) to decrease. Therefore, by continuously monitoring the forward scatter patterns for a reduction of light relative to the light intensity expected, the present invention provides reliable and accurate means for detecting temporally short defects, such as air bubbles, which may be present within the coating (31) of a fiber (32).

## Description

### Technical Field

This invention relates to an in-pattern, on-line coating defect detection system.

### Background of the Invention

Primarily because of their increasing use in optical communication systems, the fabrication and subsequent processing of optical fibers continue to be subjects of intensive research and development. Optical fibers are typically made in a continuous process which involves drawing a thin glass strand or fiber from a heat-softened glass preform. In addition, it is relatively common for the glass fibers thereafter to be coated with some type of polymeric material to provide protection from various environmental concerns, as well as increase the structural strength of the fiber.

Due to the relatively strict operational constraints under which a glass fiber must perform when part of an optical communication system, the fiber manufacturing process should be precisely monitored and controlled. In addition, the many operational characteristics of an optical fiber can be compromised if any defects are present in the protective coating applied to the fiber during the drawing process. Therefore, monitoring should not be directed only at the drawing process of the glass strand, but to the coating application process as well.

In the past there have been various attempts to monitor and verify the accuracy with which a coating layer is applied to the optical fiber. Parameters such as diameter, ellipticity, and fiber-to-coating concentricity each change relatively slowly during the drawing process. At present, such parameters are sometimes measured and controlled by various adjustments at the coating applicator. Generally, devices employing various scanning techniques are utilized to monitor the slow changing parameters identified above.

A particular method for monitoring the fiber-to-coating concentricity of the optical fiber polymeric coating by directing orthogonal light beams at the coated fiber has been disclosed. The specific details of this concentricity monitoring method may be found in a paper by Ralph E. Frazee, Jr. and David H. Smithgall entitled "High Speed Measurement and Control of Fiber-Coating Concentricity," the *Bell System Technical Journal*, Vol. 60, No. 9, November, 1981, pp. 2065-2080, hereby expressly incorporated by reference herein.

However, the particular devices presently used to measure the previously identified, slow-changing parameters are not capable of accurately identifying and responding to signals identifying defects which are temporally short in duration at line draw speeds. Very often, such defects escape detection by the various coating monitors presently available which employ scanning techniques. Among the short duration signals generally not detectable with existing devices are those indicative of defects caused by inclusion of particulates which alter the coating diameter, and entrapped bubbles which frequently erupt on the surface or high viscosity particles pulled through the applicator die. Each of these particular defects is exemplary of types of defects which can cause a loss of lightguide product during subsequent processing.

The only such defects that existing devices consistently and accurately detect are those which happen to be exceptionally large. The development of a system capable of dependably detecting short-duration defects as part of the on-line fiber processing would allow for reworking around the defect before placing the fiber into a cable for operation. A savings in both product materials and production time will be realized, in addition to the increase in the quality of the fiber ultimately positioned within a communication system.

In light of the above-identified problems with the present technology, what is needed and what seemingly is not provided by the prior art is a dependable system capable of accurately detecting defects which may exist in a coating layer applied to an optical fiber. Furthermore, the sought-after coating defect detection system should utilize a non-destructive inspection technique which causes no degradation to the quality of a coated fiber as a result of the inspection. Still further, the sought-after coating defect detection system should be operable to provide reliable detection of defects which are temporally short in duration and adaptable to be incorporated within the conventional on-line processing sequences used to manufacture optical fibers.

### Summary of the Invention

The foregoing problems of the prior art have been overcome by the in-pattern, on-line coating defect detection system set forth in the claims.

### Brief Description of the Drawing

FIG. 1 is a top view of the opto-mechanical layout of the in-pattern coating defect detection system of the present invention;
FIG. 2 is a light beam ray trace of the refracted light through a cross-section of a coated fiber;
FIG. 3 is a block diagram representative of the over-all circuitry utilized to perform the operation of the present invention; and
FIG. 4 is an electrical schematic of the input amplifier and compensation circuit utilized in the present invention.

### Detailed Description

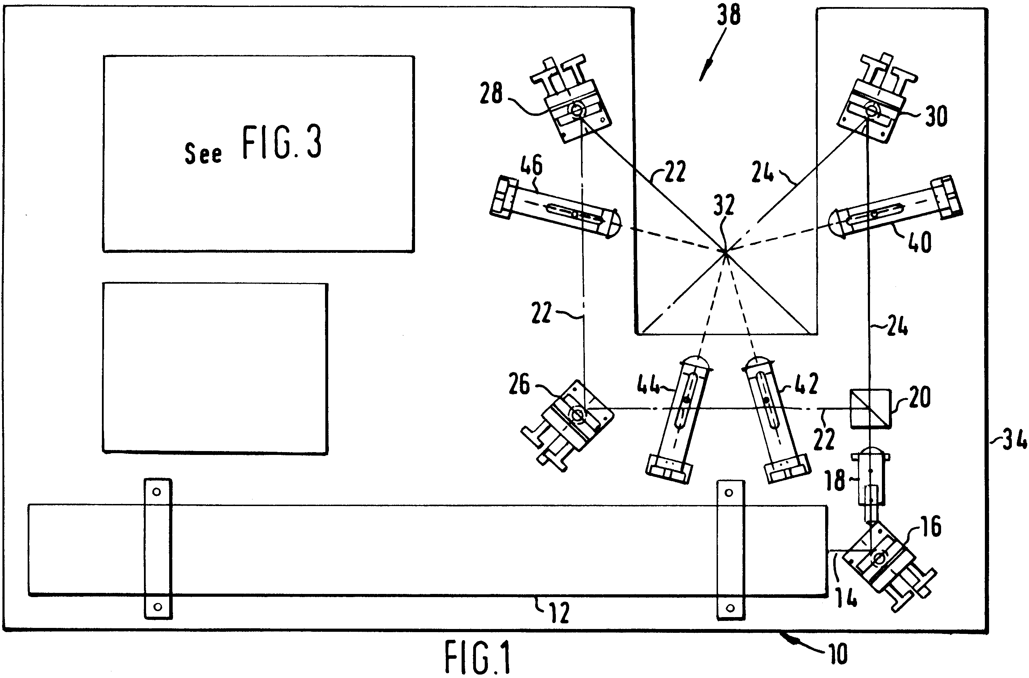

The optical and mechanical design of the continuous, in-pattern coating defect detection system 10 of the present invention is illustrated in FIG. 1. In general, the detection system 10 incorporates a two-axes, spatially separated, orthogonal illumination scheme to apply two light beams through a coated fiber. More specifically, the present invention utilizes an in-pattern inspection technique to detect coating defects with the particular portion of coated fiber being illuminated. While the preferred employment of the present invention is to inspect coating applied to a glass optical fiber, it should be noted that the coating layers of other non-glass strand materials may also be inspected using the present invention.

As used herein, the phrase in-pattern inspection refers to a technique wherein some type of photodetection means is positioned precisely within the forward scatter pattern generated when light is shone through a properly coated fiber. To identify coating defects, the in-pattern technique continuously monitors the intensity of light within the expected forward scatter pattern for a decrease in the light received. Such a decrease of light intensity indicates the presence of a defect which caused a portion of the light shone through the coated fiber to be scattered outside of the normal forward scatter pattern.

As can be seen in FIG. 1, a helium neon laser 12 emits a beam 14 which is directed by a mirror 16 into a beam expander 18. In the preferred embodiment, a 6x beam expander is utilized. The beam 14 is then split by a beam splitter 20, preferably a 50/50 cube-type, and directed along two separate optical paths 22 and 24.

Through the use of three adjustable mirrors 26, 28 and 30, the split beams traveling along optical paths 22 and 24 are directed to orthogonally impinge on a fiber 32 having a coating layer 31. However, the two beams 22 and 24 should impinge the fiber 32 at slightly different elevations with respect to each other and a base plate 34. The preferred elevation difference is approximately one-eighth of an inch (1/8'') at the fiber and ensures the two forward scattering patterns generated do not substantially interfere with each other. In addition, a fiber-throughway opening 38 is designated as the cut-out portion of base plate 34 which the fiber 32 passes through in a direction perpendicular to the base plate 34 as it travels along the fiber processing path.

Preferably, four lens/detector rail modules 40, 42, 44 and 46 are positioned in the forward scattering patterns of the two beam paths 22 and 24. In particular, modules 40 and 44 receive forward scatter from light beam 22 via mirrors 26 and 28, while modules 42 and 46 receive forward scatter from light beam 24 via mirror 30. Modules 40, 42, 44 and 46 are identical in physical construction with each module comprising a cylindrical lens and associated photodetector. The specific configuration of each module utilizes a rail arrangement which allows an operator to precisely orient the lens relative to its corresponding photodetector. A detailed illustration of the various opto-mechanical parts of modules 40, 42, 44 and 46 is not specifically shown herein but it should be noted that any known mechanism for securing and aligning a lens relative to a photodetector will suffice in carrying out the present invention. However, one particular configuration for the lens/detector module is described below.

The lens/detector modules 40, 42, 44 and 46 may be separately assembled before mounting on the base plate 34. The cylindrical lens of each module may be attached to a corresponding holding rail with a silicone rubber type adhesive. In the preferred embodiment, the cylindrical lenses have a 25.4 mm focal length and includes a plano surface and a convex surface. The four photodetectors within lens/detector modules 40, 42, 44 and 46 are preferably BPX65 photodiodes manufactured by Centronics Incorporated which have good high frequency response, sensitivity, and relatively low cost. These particular detectors have a 1 mm square active area and are mounted in a TO-18 type, 2 pin header. A mounting fixture may be utilized to hold each of the photodiodes in their desired orientation with a nominal height of 1 inch. The mounting fixture is moveable relative to the associated lens, both along and vertically to the module axis, allowing alignment of the focused light precisely onto the active area of the photodiode.

After the lens is secured, the detector surface is positioned so as to be approximately 51 mm away from the plano surface of the lens. The modules 40, 42, 44 and 46 are installed on the base plate 34 with a convex side of the lens 51 mm from the fiber 32. With the laser 12 on and a coated fiber 32 in position, a nearly focused spot of light should be formed on the detector fixture. However, if slightly misaligned, the lens and photodetector may then be adjusted to position the focused spot of light within the active area of the photodiodes.

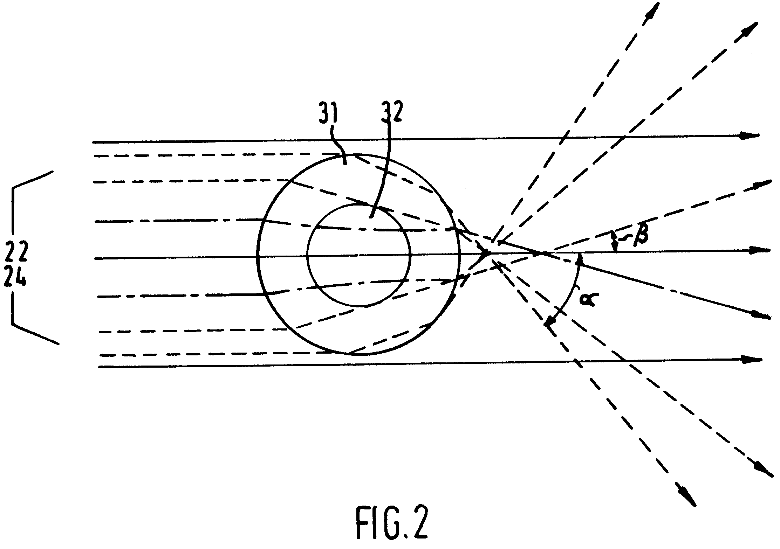

In the preferred embodiment of the present invention, two different angle areas of the forward scatter pattern may be monitored. As illustrated in FIG. 2, either a relatively high photodiode optical axis angle α or a relatively low photodiode optical axis angle β may be used. As used herein, a relatively high axis angle α is approximately 60°, while a relatively low axis angle β is approximately 15°. The particular angles specified above correspond to a silica fiber having a diameter of 125 microns, a polymer coating layer which increases the overall diameter to 250 microns, a coating refractive index of approximately 1.52 and a laser wavelength in the range of 0.63 to 0.68 microns. It should be noted that the specific angles may vary slightly for coated fibers having different fiber diameters, coating thicknesses and/or coating materials.

The use of a low angle β provides monitoring of the scattered light which illuminates both the coating layer 31 as well as the fiber itself 32. By operating within the low angle β region and monitoring the light illuminating both the fiber and the coating, the present invention may detect various defects or anomalies which exist either in the fiber 32, the coating layer 31 or along the fiber-coating interface.

However, when using a relatively high angle α, light refracted through only the polymer coating layer 31 strikes the appropriately aligned photodiodes. Therefore, if it is desired to inspect only for defects within the coating layer, the use of a relatively high optical axis angle α is preferred. FIG. 2 is a ray trace of the refracted light through a cross-section of coated fiber 32. In addition, the scattered light is less intense at relatively high angles than at more acute angles so an optical collection element is required.

The beam expander 18 of the present invention may be assembled separately. Two plano-cylindrical lenses of different focal length, a 6.35 mm and a 40.0 mm respectively, are mounted with a silicone rubber type adhesive to the expander system rail. The lenses are mounted plano side toward plano side and are initially spaced at 46.35 mm. This particular degree of spacing produces a nearly recollimated 6.3 times expansion of the beam in one direction. The preferred configuration of the beam expander 18 allows slight spacing adjustments to be made after installing the module to bring the beam into collimation. The beam expander 18 is positioned on the base plate 34 between the first mirror 16 and the splitter cube 20.

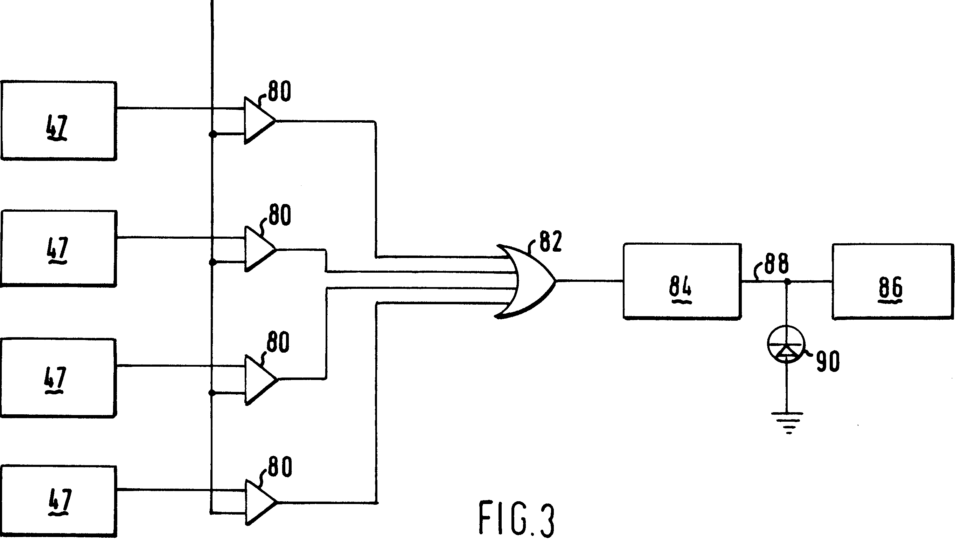

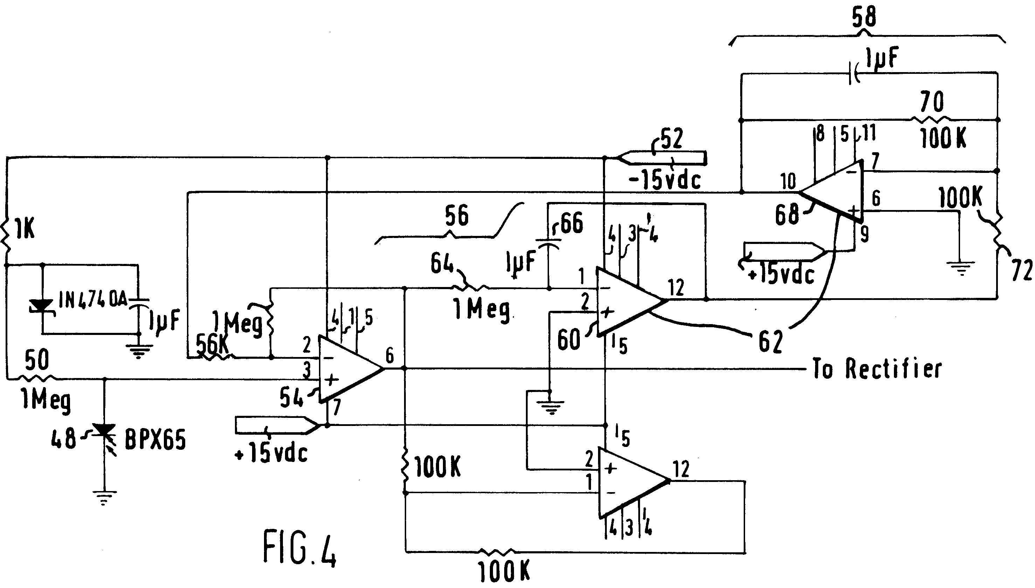

As generally illustrated in FIG. 3, a defect detection electronic circuit compares and combines the signals from the photodiodes 48 within the lens/detector modules 40, 42, 44 and 46 in four identical electrical compensation channels 47 included therein. Each of these compensation channels are generally designated as elements 47 within FIG. 3, with the details of one of these channels specifically illustrated in FIG. 4. The defect signals generated by the compensation circuits 47 from the same axis are combined together utilizing the electrical circuit in accordance with the block diagram of FIG. 3.

The fastest mode of operation for the preferred photodiode 48 is photoconductive. The photoconductive mode requires a reverse bias be applied to the diode junction. As specifically illustrated in FIG. 4, the reverse bias is applied through a 1 megohm resistor 50 connected in series between a regulated negative 15 volt supply 52 and the anode of the photodiode 48. The cathode of photodiode 48 is returned to the power supply common which is circuit ground. The 1 megohm resistor 50 is also the load resistor for the diode 48 and therefore develops the input signal voltage. In the preferred embodiment of the present invention, the input signal voltage is applied to the non-inverting input of either a Harris HA-2-2520/883 or a Teledyne Philbrick TP1322 operational amplifier 54. Since the chosen input circuitry has a high impedance, the input to the amplifier is D.C. coupled to keep the capacitance low. The gain of the op-amp 54 is controlled by the ratio of feedback to input resistances and in the preferred circuit established at 25 db. If the input resistance were returned to ground, the amplifier output would be in hard saturation very near the negative supply voltage. Therefore, the input resistance returns to a low impedance offsetting voltage source whose output level is controlled by a balance seeking compensation circuit.

The compensation circuits 47 are each electrically configured in accordance with the schematic detailed in FIG 4. As illustrated, each compensation circuit 47 in FIG. 4 comprises an integrator portion, generally identified as 56, with a one second time constant and a unity gain inverter portion, generally identified as 58. The integrator portion 56, is configured around the first portion, designated in FIG. 4 generally as element 60, of a dual op-amp 62. In the preferred embodiment, the dual op-amp 62 is preferably a Motorola MC1747. In the integrator portion 56, the non-inverting input is returned to circuit ground and the inverting input is connected through a 1 megohm resistor 64 to the output of op-amp 54. The feedback current to the inverting input is supplied through a 1 microfarad capacitor 66 to form the integrating circuit 56. The output voltage from the integrator 56 is preferably inverted before it is fed back to op-amp 62. The inversion process is accomplished in the second portion, designated in FIG. 4 generally as element 68, of the dual op-amp 62. The non-inverting input is grounded and 100 K resistors 70 and 72 are used as input and feedback components. The output impedance of the dual op-amp 62 is low relative to the value of the input resistor of op-amp 54. The output voltage from the dual op-amp 62 is applied to the input resistor of op-amp 54 and thereby causes the output of op-amp 54 to return to zero. The operational portions 60 and 68 of dual op-amp 62 and op-amp 54 work together to form a compensation circuit 47 which self-adjusts to new quiescent photodiode currents in approximately 1 second. It should be noted that substitutions of equivalently operative electrical components may be made without varying from the scope of the present invention.

The balanced output from op-amp 54 allows high gain bipolar output voltage signals from an input voltage which varies more or less negative. Changes in photodiode current occurring faster than 1 second are amplified by op-amp 54 and may be coupled to other circuits for further processing. Within each compensation circuit 47, an amplified output signal is coupled to a full wave rectifier (not shown). The bipolar signal swings are then converted to a unipolar signal whose amplitude is directly related to the intensity change on the photodiode 48, and therefore, to the severity of the defect.

As illustrated in FIG. 3, the output of each compensation circuit 47 is compared against an established unipolar reference voltage. The reference voltage is adjusted during calibration and establishes the system sensitivity. The reference voltage and the signal voltage are input differentially to a series of voltage comparators 80. The output from each comparator 80 is logically "OR-ed", via OR gates 82 with the comparator output of the compensation circuit 47 which processes the defect signal from the complementary lens/detector module. The OR-ed signal is then used to trigger a pulse stretching circuit 84 to allow time for a monitor computer 86 to acquire the data. A stretched output 88 also illuminates display LEDs 90 for operator information. The comparing and stretching circuits illustrated in FIG. 3 are replicated to process signals from the modules in the orthogonal inspection axis.

The above descriptions have detailed optical, mechanical and electrical configurations in accordance with the preferred embodiment of the present invention. The particular operation of the present coating defect detection system will now be discussed. As stated earlier, glass fibers for use in optical communication systems are manufactured by a drawing process. During the drawing of a glass fiber, a coating layer is conventionally applied to provide additional strength enhancement for the fiber or to provide protection from various environmental concerns which may inhibit the operation of the fiber.

Generally, the draw process includes a series of on-line processes performed sequentially. The present invention provides a detection system which may be incorporated on-line to detect coating defects to avoid installing a fiber with unknown coating defects into a communication cable. The instant detection system is installed at a location after the application of the coating layer but prior to the fiber take-up. As the fiber 32 passes through the system, light beams 22 and 24 illuminate a portion of the coated fiber 32 across its entire outer diameter. A forward scatter pattern as generally shown in FIG. 2 is generated opposite each light source as the light passes through the coating layer 31 and/or the fiber 32.

A series of photodiodes 48 is positioned within the fiber scatter pattern expected to be produced by a properly coated fiber. However, various defects cause portion of the light to be scaltered outside the detecting area of the photodiodes 48. The present invention continuously monitors the light intensity level of the actual forward scatter pattern. This measured intensity of the actual forward scatter pattern is compared by a series of comparators 80 of FIG. 3 to the intensity of the expected forward scatter pattern. The output of each comparator 80 is then combined via an OR gate 82. When the light intensity within the actual forward scatter pattern is less than that of the expected forward scatter pattern, an indication is generated such that a monitor computer 86 or an LED display 90 can identify the presence of a defect within the coating layer.

As stated earlier, the heart of the in-pattern detection technique utilized in the present invention relies on recognizing a decrease in light intensity by photodetectors positioned precisely within an expected forward scatter pattern to indicate the presence of a defect. It should be specifically noted that even though particular circuitry is disclosed herein, minor variations in the particular electronic monitoring used to measure the light intensity within the forward scatter pattern for the purpose of detecting coating defects is deemed to be within the scope of the present invention regardless of the exact electronic components or configuration employed.

## Claims

1. A system for detecting defects within a coating layer characterized by
means for illuminating a coated strand with light so as to create an expected forward scatter pattern indicative of a forward path and intensity of the light when shone through a coating layer of acceptable quality; and
means for monitoring the intensity level within the forward scatter pattern for a decrease in light as an indication that a defect exists within the coating layer.

2. The defect detection system of claim 1 wherein the means for illuminating the coated strand comprises at least one laser source.

3. The defect detection system of claim 2 wherein the illuminating means further comprises beam splitter means which generates at least two substantially equivalent light beams from a single light beam emitted from the laser source.

4. The defect detection system of claim 1 wherein the monitoring means comprises at least two photodetectors positioned precisely within the forward scatter pattern.

5. The defect detection system of claim 1 wherein the coated strand is illuminated by at least two orthogonally-aligned light beams.

6. The defect detection system of claim 1 wherein the light which illuminates the coated strand has a beam-width wider than the outer diameter of the coated strand.

7. A method of detecting defects within a coating layer characterized by the steps of:
illuminating a coated strand with light so as to create an expected forward scatter pattern indicative of a forward path and intensity of the light when shone through a coating of acceptable quality; and
monitoring the intensity level within the forward scatter pattern for a decrease in light as an indication that a defect exists within the coating layer.

8. The defect detection method of claim 7 wherein the coated strand is illuminated by at least two orthogonally-aligned light beams.

9. The defect detection method of claim 7 wherein the light which illuminates the coated strand has a beam-width wider than the diameter of the coated strand.

10. The defect detection method of claim 7 wherein the intensity level of the forward scatter pattern is monitored by at least two photodiodes positioned precisely within the forward scatter pattern.
